# EUROPÄISCHE PATENTANMELDUNG

(11) **EP 1 400 984 A2**
(43) Veröffentlichungstag der Anmeldung: **24.03.2004**
(21) Anmeldenummer: 03019198.5
(22) Anmeldetag: 25.08.2003
(51) Int. Cl.: G21K 1/10, G21K 1/02

(54) **Verfahren zur Herstellung und Aufbringung eines Streustrahlenrasters oder Kollimators auf einen Röntgen- oder Gammadetektor**

(30) Priorität: 06.09.2002 DE 10241423
(71) Anmelder: SIEMENS AKTIENGESELLSCHAFT, 80333 München (DE)
(72) Erfinder: Hoheisel, Martin, Dr., 91056 Erlangen (DE); Schäfer, Martin, 10557 Berlin (DE); Sklebitz, Hartmut, 91056 Erlangen (DE)

(57) **Zusammenfassung**

Die vorliegende Erfindung betrifft ein Verfahren zur Herstellung und Aufbringung eines Streustrahlenrasters oder Kollimators auf einen Röntgen- oder Gammadetektor mit matrixförmig angeordneten Detektorelementen (16), die eine Detektorfläche mit für Röntgen- bzw. Gammastrahlung empfindlichen Detektionsbereichen (16a) und weniger empfindlichen Zwischenbereichen (16b) bilden. Bei dem Verfahren wird zunächst eine Grundstruktur (6) für den Streustrahlenraster bzw. Kollimator mittels einer Rapid-Prototyping-Technik erzeugt, durch die Durchgangskanäle (5) und Zwischenwände (6a) des Streustrahlenrasters bzw. Kollimators gebildet werden, die zumindest in einer ersten Richtung einen Mittenabstand aufweisen, der gleich oder ein ganzzahliges Vielfaches eines Mittenabstandes der empfindlichen Detektionsbereiche (16a) des Detektors (7) ist. Die Zwischenwände (6a) werden zur Fertigstellung des Streustrahlenrasters bzw. Kollimators mit einem Röntgen- bzw. Gammastrahlung stark absorbierenden Material (14) beschichtet. Anschließend wird der Streustrahlenraster bzw. Kollimator derart auf die Detektorfläche aufgebracht und mit der Detektorfläche verbunden, dass zumindest die senkrecht zur ersten Richtung verlaufenden Zwischenwände (6a) oder deren Beschichtung (14) über den weniger empfindlichen Zwischenbereichen (16b) der Detektorfläche liegen. Mit dem vorliegenden Verfahren lässt sich in einfacher Weise ein Detektor mit einem Streustrahlenraster bzw. Kollimator realisieren, bei dem keine Moiré-Störungen auftreten.

## Beschreibung

Verfahren zur Herstellung und Aufbringung eines Streustrahlenrasters oder Kollimators auf einen Röntgen- oder Gammadetektor

Die vorliegende Erfindung betrifft ein Verfahren zur Herstellung und Aufbringung eines Streustrahlenrasters oder Kollimators auf einen Röntgen- oder Gammadetektor mit matrixförmig angeordneten Detektorelementen, die eine Detektorfläche mit für Röntgen- bzw. Gammastrahlung empfindlichen Detektionsbereichen und weniger empfindlichen Zwischenbereichen bilden, sowie einen Röntgen- und Gammadetektor mit einem Streustrahlenraster bzw. Kollimator, der mit diesem Verfahren hergestellt und aufgebracht wurde.

In der Röntgenbildtechnik werden heutzutage hohe Anforderungen an die Bildqualität der Röntgenaufnahmen gestellt. Bei derartigen Aufnahmen, wie sie insbesondere in der medizinischen Röntgendiagnostik durchgeführt werden, wird ein zu untersuchendes Objekt von Röntgenstrahlung einer annähernd punktförmigen Röntgenquelle durchleuchtet und die Schwächungsverteilung der Röntgenstrahlung auf der der Röntgenquelle gegenüberliegenden Seite des Objektes zweidimensional erfasst. Auch eine zeilenweise Erfassung der durch das Objekt geschwächten Röntgenstrahlung kann bspw. in Computertomographie-Anlagen vorgenommen werden. Als Röntgendetektoren kommen neben Röntgenfilmen und Gasdetektoren zunehmend Festkörperdetektoren zum Einsatz, die in der Regel eine matrixförmige Anordnung optoelektronischer Halbleiterbauelemente als lichtelektrische Empfänger aufweisen. Jeder Bildpunkt der Röntgenaufnahme sollte idealerweise die Schwächung der Röntgenstrahlung durch das Objekt auf einer geradlinigen Achse von der punktförmigen Röntgenquelle zu den dem Bildpunkt entsprechenden Ort der Detektorfläche entsprechen. Röntgenstrahlen, die von der punktförmigen Röntgenquelle auf dieser Achse geradlinig auf den Röntgendetektor auftreffen werden als Primärstrahlen bezeichnet.

Die von der Röntgenquelle ausgehende Röntgenstrahlung wird im Objekt jedoch aufgrund unvermeidlicher Wechselwirkungen gestreut, so dass neben den Primärstrahlen auch Streustrahlen, sog. Sekundärstrahlen, auf den Detektor auftreffen. Diese Streustrahlen, die in Abhängigkeit von Eigenschaften des Objektes bei diagnostischen Bildern bis über 90% der gesamten Signal-Aussteuerung eines Röntgendetektors verursachen können, stellen eine zusätzliche Rauschquelle dar und verringern daher die Erkennbarkeit feiner Kontrastunterschiede. Dieser wesentliche Nachteil der Streustrahlung ist dadurch begründet, dass aufgrund der Quanteneigenschaft der Streustrahlung ein signifikanter zusätzlicher Rauschanteil in der Bildaufnahme verursacht wird.

Zur Verringerung der auf die Detektoren auftreffenden Streustrahlungsanteile werden daher zwischen dem Objekt und dem Detektor sog. Streustrahlenraster eingesetzt. Streustrahlenraster bestehen aus regelmäßig angeordneten, die Röntgenstrahlung absorbierenden Strukturen, zwischen denen Durchgangskanäle oder Durchgangsschlitze für den möglichst ungeschwächten Durchgang der Primärstrahlung ausgebildet sind. Diese Durchgangskanäle bzw. Durchgangsschlitze sind bei fokussierten Streustrahlenrastern entsprechend dem Abstand zur punktförmigen Röntgenquelle, d. h. dem Abstand zum Fokus der Röntgenröhre, auf den Fokus hin ausgerichtet. Bei nicht fokussierten Streustrahlenrastern sind die Durchgangskanäle bzw. Durchgangsschlitze über die gesamte Fläche des Streustrahlenrasters senkrecht zu dessen Oberfläche ausgerichtet. Dies führt jedoch zu einem merklichen Verlust an Primärstrahlung an den Rändern der Bildaufnahme, da an diesen Stellen ein größerer Teil der einfallenden Primärstrahlung auf die absorbierenden Bereiche des Streustrahlenrasters trifft.

Zur Erzielung einer hohen Bildqualität werden sehr hohe Anforderungen an die Eigenschaften von Röntgen-Streustrahlenrastern gestellt. Die Streustrahlen sollen einerseits möglichst gut absorbiert werden, während andererseits ein möglichst hoher Anteil an Primärstrahlung ungeschwächt durch den Streustrahlenraster hindurchtreten soll. Eine Verminderung des auf die Detektorfläche auftreffenden Streustrahlenanteils lässt sich durch ein großes Verhältnis der Höhe des Streustrahlenrasters zur Dicke bzw. dem Durchmesser der Durchgangskanäle oder Durchgangsschlitze, d. h. durch eine hohes Schachtverhältnis, erreichen. Wegen der Dicke der zwischen den Durchgangskanälen oder Durchgangsschlitzen liegenden absorbierenden Struktur- oder Wandelemente kann es jedoch zu Bildstörungen durch Absorption eines Teils der Primärstrahlung kommen. Gerade beim Einsatz von Festkörperdetektoren führen Inhomogenitäten der Raster, d. h. Abweichungen der absorbierenden Bereiche von ihrer Ideallage, zu Bildstörungen durch eine Abbildung der Raster im Röntgenbild.

Zur Minimierung von Bildstörungen durch Streustrahlenraster ist es bekannt, die Raster während der Aufnahme in lateraler Richtung zu bewegen. Bei sehr kurzen Belichtungszeiten von bspw. 1 - 3 ms können aber auch hier durch ungenügende Bewegungsgeschwindigkeit der Raster Streifen im Bild auftreten. Auch bei sehr langen Belichtungszeiten können störende Streifen durch die Umkehr der Raster-Bewegungsrichtung während der Belichtung auftreten.

In letzter Zeit werden für die Röntgenbildaufnahme zunehmend Festkörperdetektoren eingesetzt, die aus mehreren matrixförmig angeordneten Detektorelementen gebildet sind. Die Detektorelemente sind hierbei in einem in der Regel quadratischen oder rechteckigen Gitter angeordnet. Auch bei derartigen Festkörperdetektoren muss durch effektive Unterdrückungsmaßnahmen das Auftreffen von Streustrahlen auf die durch die Detektorelemente gebildete Detektorfläche soweit wie möglich reduziert werden. Aufgrund der regelmäßigen Strukturierung der durch die Detektorelemente gebildeten Bildelemente des Detektors besteht hier zusätzlich die Gefahr, dass die Strukturen von Bildelementen und Streustrahlenrastern miteinander interferieren. Dadurch können störende Moiré-Erscheinungen auftreten. Diese können zwar in bestimmten Fällen durch eine nachgeschaltete Bildverarbeitungsmaßnahme minimiert oder beseitigt werden. Dies ist jedoch nur möglich, wenn ihr Projektionsbild auf dem Detektor absolut unveränderlich ist.

Die gleiche Problematik stellt sich in der Nuklearmedizin, insbesondere bei der Anwendung von Gamma-Kameras, wie bspw. Anger-Kameras. Auch bei dieser Aufnahmetechnik muss ähnlich wie in der Röntgendiagnostik darauf geachtet werden, dass möglichst wenig gestreute Gammaquanten den Detektor erreichen. Im Gegensatz zur Röntgendiagnostik befindet sich bei der Nukleardiagnostik die Strahlungsquelle für die Gamma-Quanten im Inneren des Objektes. Dem Patienten wird hierbei ein mit bestimmten, instabilen Nukliden markiertes Stoffwechselpräparat injiziert, das sich dann organspezifisch anreichert. Durch den Nachweis der entsprechend aus dem Körper emittierten Zerfallsquanten wird dann ein Abbild des Organs erhalten. Der zeitliche Verlauf der Aktivität im Organ lässt Rückschlüsse auf dessen Funktion zu. Für den Erhalt eines Bildes des Körperinneren muss vor dem Gamma-Detektor ein Kollimator eingesetzt werden, der die Projektionsrichtung des Bildes festlegt. Ein derartiger Kollimator entspricht von der Funktionsweise und vom Aufbau her dem Streustrahlenraster in der Röntgendiagnostik. Nur die durch die Vorzugsrichtung des Kollimators bestimmten Gamma-Quanten können den Kollimator passieren, schräg dazu einfallende Quanten werden in den Kollimatorwänden absorbiert. Aufgrund der höheren Energie der Gamma-Quanten im Vergleich zu Röntgenquanten müssen Kollimatoren um ein Vielfaches höher ausgeführt werden als Streustrahlenraster für Röntgenstrahlung.

So können gestreute Quanten während der Bildaufnahme ausselektiert werden, indem nur Quanten einer bestimmten Energie im Bild berücksichtigt werden. Allerdings bedingt jedes detektierte Streuquant eine Totzeit der Gamma-Kamera von bspw. einer Mikrosekunde, während der keine weiteren Ereignisse registrierbar sind. Wenn daher kurz nach der Registrierung eines Streuquants ein Primärquant eintrifft, kann es nicht registriert werden und geht für das Bild verloren. Auch wenn ein Streuquant zeitlich - innerhalb gewisser Grenzen - mit einem Primärquant koinzidiert, tritt ein ähnlicher Effekt auf. Da die Auswerteelektronik dann beide Ereignisse nicht mehr trennen kann, wird eine zu hohe Energie ermittelt und das Ereignis wird nicht registriert. Die beiden angeführten Fälle erklären, dass eine hoch wirksame Streustrahlen-Unterdrückung auch in der Nukleardiagnostik zu einer verbesserten Quanteneffizienz führt. Letztlich wird dadurch eine verbesserte Bildqualität bei gleicher Dosierung des applizierten Radio-Nuklids erreicht oder bei gleicher Bildqualität eine geringere Radio-Nuklid-Dosis ermöglicht, so dass die Strahlenexposition des Patienten gesenkt und kürzere Bildaufnahmezeiten erreicht werden können.

In Zukunft werden auch für die Gammabildaufnahme zunehmend Festkörperdetektoren eingesetzt werden, die aus mehreren matrixförmig angeordneten Detektorelementen gebildet sind. Die Detektorelemente sind hierbei in einem in der Regel quadratischen oder rechteckigen Gitter angeordnet. Auch bei derartigen Festkörperdetektoren muss durch effektive Unterdrückungsmaßnahmen das Auftreffen von Streustrahlen auf die durch die Detektorelemente gebildete Detektorfläche soweit wie möglich reduziert werden. Aufgrund der regelmäßigen Strukturierung der durch die Detektorelemente gebildeten Bildelemente des Detektors besteht hier zusätzlich die Gefahr, dass die Strukturen von Bildelementen und Kollimatoren miteinander interferieren.

Kollimatoren für Gamma-Kameras werden im Allgemeinen aus mechanisch gefalteten Blei-Lamellen herstellt. Dies ist eine relativ kostengünstige Lösung, hat aber den Nachteil, dass insbesondere bei Einsatz von Festkörperkameras mit matrixförmig angeordneten Detektorelementen, bspw. bei Cadmium-Zink-Tellurid-Detektoren, wegen der dann relativ groben Struktur dieser Kollimatoren störende Aliasing-Effekte auftreten können.

Aus der Veröffentlichung von G. A. Kastis et al., "A Small-Animal Gamma-Ray Imager Using a CdZnTe Pixel Array and a High Resolution Parallel Hole Collimator", ist ein Verfahren zur Herstellung eines zellenartig aufgebauten Kollimators für Gamma-Strahlung bekannt. Der Kollimator wird in diesem Fall aus laminierten Schichten aus Metallfolien, hier aus Wolfram, hergestellt, die photochemisch geätzt werden. Dieses Herstellungsverfahren ist jedoch aufgrund der Vielzahl von photolitographischen Belichtungs- und Ätzschritten sehr aufwendig und kostenintensiv.

In der US 6,021,173 A wird ein Ansatz beschrieben, der Moiré-Strukturen beim Betrieb eines Röntgendetektors mit matrixförmig angeordneten Detektorelementen in Verbindung mit einem stationär angeordneten Streustrahlenraster vermeiden soll. Der Streustrahlenraster ist bei dieser Druckschrift über der Detektorfläche direkt auf dem Röntgendetektor aufgebracht. Die absorbierenden Strukturelemente des Streustrahlenrasters sind in einem Abstand zueinander ausgebildet, der geringer ist als die Ausdehnung des kleinsten auflösbaren Details im Röntgenbild. Die regelmäßig angeordneten absorbierenden Strukturelemente bilden sich daher mit einer so hohen Ortsfrequenz ab, dass sie jenseits des Auflösungsvermögens des Röntgentdetektors liegen. Da der Abstand der Strukturelemente im Streustrahlenraster nicht beliebig klein gewählt werden kann, muss ein Detektor mit einer adaptiert eingeschränkten Ortsauflösung eingesetzt werden. Dies führt jedoch zu einer nicht wünschenswerten Verringerung der detektiven Quanteneffizienz (DQE) bei hohen Ortsfrequenzen.

Aus der nachveröffentlichten deutschen Patentanmeldung DE 101 51 568 ist ein Verfahren zur Aufbringung eines Streustrahlenrasters auf einen Röntgendetektor bekannt, bei dem eine Grundstruktur für den Streustrahlenraster mittels einer Rapid-Prototyping-Technik direkt auf der Detektorfläche erzeugt wird, so dass absorbierende Bereiche des Streustrahlenrasters in weniger empfindlichen Zwischenbereichen des Röntgendetektors liegen. Bei diesem Verfahren besteht jedoch die Gefahr der Beschädigung des Röntgendetektors bei der Erzeugung des Streustrahlenrasters.

Ausgehend von diesem Stand der Technik besteht die Aufgabe der vorliegenden Erfindung darin, ein Verfahren zur Herstellung und Aufbringung eines Streustrahlenrasters oder Kollimators auf einen Röntgen- oder Gammadetektor mit matrixförmig angeordneten Detektorelementen anzugeben, mit dem sich eine Anordnung eines Streustrahlenrasters oder Kollimators auf einem Röntgen- bzw. Gammadetektor realisieren lässt, die eine Bildaufnahme ohne Moiré-Strukturen bei hoher detektiver Quanteneffizienz ermöglicht.

Die Aufgabe wird mit dem Verfahren gemäß Patentanspruch 1 gelöst. Die Patentansprüche 16 und 17 geben einen Röntgen- und Gammadetektor mit einem gemäß dem Verfahren hergestellten und aufgebrachten Streustrahlenraster bzw. Kollimator an. Vorteilhafte Ausgestaltungen des Verfahrens sind Gegenstand der Unteransprüche oder lassen sich aus der nachfolgenden Beschreibung und den Ausführungsbeispielen entnehmen.

Bei dem vorliegenden Verfahren wird zunächst eine Grundstruktur für den Streustrahlenraster bzw. Kollimator mittels einer Rapid-Prototyping-Technik, vorzugsweise mit der Technik der Stereolithographie, erzeugt, durch die Durchgangskanäle und Zwischenwände des Streustrahlenrasters bzw. Kollimators gebildet werden, die zumindest in einer ersten Richtung einen Mittenabstand aufweisen, der gleich oder ein ganzzahliges Vielfaches des Mittenabstandes der empfindlichen Detektionsbereiche des Detektors ist. Anschließend werden die Zwischenwände mit einem Röntgen- bzw. Gammastrahlung stark absorbierenden Material beschichtet, um den Streustrahlenraster bzw. Kollimator fertig zu stellen. Die auf diese Weise beschichtete Grundstruktur, d. h. der Streustrahlenraster bzw. Kollimator, wird anschließend derart auf die Detektorfläche aufgebracht und mit dieser verbunden, dass zumindest die senkrecht zu der ersten Richtung verlaufenden Zwischenwände oder deren Beschichtung über den weniger empfindlichen Zwischenbereichen der Detektorfläche liegen. Diese weniger oder nicht empfindlichen Zwischenbereiche der Detektorfläche entsprechen den Bereichen, in denen die einzelnen Detektorelemente aneinander stoßen. Da die Detektorelemente zudem in der Regel nicht über die gesamte Fläche strahlungsempfindlich sind, ergeben sich derartige unempfindliche Zwischenbereiche in den Randbereichen der einzelnen Detektorelemente.

Die Grundstruktur für den Streustrahlenraster bzw. Kollimator wird bei dem vorliegenden Verfahren derart aufgebaut, dass sich zumindest in einer Richtung die Zwischenwände oder die an den Zwischenwänden innerhalb der Durchgangsöffnungen angebrachte absorbierende Beschichtung auf einer Seite der Zwischenwände über den Zwischenbereichen auf dem Detektor erstrecken. Können die Zwischenwände aufgrund besonders schmaler Zwischenbereiche nicht mit einer ausreichend geringen Dicke erzeugt werden, so können sie im Kontaktbereich mit der Detektoroberfläche zumindest teilweise über den Zwischenbereichen liegen. Die sich in der anderen Richtung erstreckenden Zwischenwände sind vorzugsweise ebenfalls derart angeordnet, dass sie oder ihre Beschichtung auf einer Seite über den nicht empfindlichen Zwischenbereichen der Detektorfläche liegen. In beiden Dimensionen können hierbei die Abstände der Zwischenwände den Wert eines ganzzahligen Vielfachen des Mittenabstandes der empfindlichen Detektionsbereiche des Detektors annehmen. Vorzugsweise stimmen jedoch die Mittenabstände der Zwischenwände in beiden zueinander senkrechten Richtungen mit den entsprechenden Mittenabständen der empfindlichen Detektionsbereiche überein.

Durch den Einsatz einer Rapid Prototyping Technik beim Aufbau der Grundstruktur können sehr filigrane Strukturen mit sehr hoher Genauigkeit erzeugt werden. Bei der Rapid Prototyping Technik werden 3D-CAD-Konstruktionen, hier die Geometrie der Grundstruktur, in Volumendaten im CAD-System konvertiert. Das 3D-Volumenmodell für das Rapid Prototyping wird anschließend in einem Rechner in Querschnitte aufgeteilt. Die Querschnitte haben eine Schichtdicke von 100 µm oder darunter. Nach dem Übertragen der Daten auf eine Rapid Prototyping Anlage wird die ursprüngliche Form Schicht für Schicht aufgebaut. Im vorliegenden Verfahren wird dabei eine Rapid Prototyping Technik eingesetzt, bei der der Schichtaufbau durch Einwirkung von Strahlung, insbesondere durch Laserstrahlung, erfolgt. Gerade Laserstrahlung bietet hierbei den Vorteil der Erzeugung sehr filigraner Strukturen.

In der bevorzugten Ausführungsform des vorliegenden Verfahrens wird für den Aufbau der Grundstruktur die Technik der Stereolithographie eingesetzt. Bei diesem Verfahren bildet ein computergesteuerter UV-Laserstrahl die jeweiligen Konturen der einzelnen Schichten des 3D-Volumenmodells der Grundstruktur auf einem flüssigen Polymerharz ab. Das Harz härtet durch die Einwirkung des Lasers an den belichteten Stellen bzw. Flächen aus. Dann wird die Bauteilplattform der Anlage abgesenkt und eine neue dünne Schicht Photopolymer-Harz aufgetragen. Durch Wiederholung dieser Schritte wird sukzessive die vollständige Geometrie der Grundstruktur von unten nach oben aufgebaut. In einer Ausführungsform des vorliegenden Verfahrens kann auch die Technik der Mikrostereolithographie zur Erzeugung der Grundstruktur eingesetzt werden.

Durch das vorliegende Verfahren wird die Herstellung und Aufbringung eines Streustrahlenrasters bzw. Kollimators direkt auf den Detektor gegenüber der in der Beschreibungseinleitung angegebenen nachveröffentlichten Druckschrift vereinfacht und lässt sich kostengünstiger realisieren. Durch die Ausgestaltung und vorgeschlagene Aufbringung des Streustrahlenrasters bzw. Kollimators in der angegebenen Art und Weise, so dass eine oder zwei der insgesamt vier Zwischenwände oder deren Beschichtung auf einer Seite mit einer Grenzlinie zwischen den Detektorpixeln hinreichend übereinstimmen, wird der Dosisbedarf beim Einsatz dieses Streustrahlenrasters bzw. Kollimators verringert. Aufgrund dieser Anordnung in Bereichen, die eine geringere Empfindlichkeit für die Röntgen- bzw. Gammastrahlung aufweisen, wirken die Zwischenwände bzw. die daran angebrachte absorbierende Beschichtung weniger oder nicht Primärstrahlen schwächend. Die vorgeschlagene Ausgestaltung und das Aufbringen des Streustrahlenrasters bzw. Kollimators vorwiegend in die genannten Zwischenbereiche schließt zudem Interferenzen mit der Pixelstruktur des Detektors aus.

Die Detektoren weisen praktisch immer einen Füllfaktor auf, der kleiner als 1 ist. Dies gilt insbesondere für mit Leuchtstoff beschichtete a-Si-Detektorflächen. Auch bei mit Selen beschichteten Detektorflächen differiert der Füllfaktor von 1, besonders bei kleinen Detektionsbereichen oder Pixels. Dadurch ist die Quanteneffizienz vorwiegend in den Bereichen zwischen den Pixel-Flächen reduziert. Wird nun die Primärstrahlung durch die Streustrahlen absorbierenden Strukturen nur zwischen den Pixeln geschwächt, ist dies vorteilhafter zum Erreichen einer hohen Quanteneffizienz als wenn diese Strukturen beliebig angeordnet sind. Moiré-Störungen zwischen den Pixeln und der absorbierenden Struktur sind hierbei nicht möglich. Die vorliegende Anordnung des Streustrahlenrasters bzw. Kollimators ermöglicht somit ein besseres Nutzbarmachen der Primärstrahlung, da die unvermeidliche Primärabsorption des Streustrahlenrasters bzw. Kollimators hauptsächlich in geometrische Bereiche des Detektors fällt, die einen reduzierten Beitrag zum Bildsignal leisten.

In einer bevorzugten Ausführungsform des vorliegenden Verfahrens werden die Stirnflächen der Zwischenwände von der absorbierenden Beschichtung freigehalten oder die evtl. aufgebrachte absorbierende Beschichtung von diesen Stirnflächen entfernt. Unter den Stirnflächen sind hierbei die dem Detektor zugewandten sowie die dem Detektor abgewandten Seiten der Zwischenwände zu verstehen, d. h. die Seiten, die nicht innerhalb der Durchgangskanäle liegen. Die Freihaltung dieser Stirnflächen kann bspw. durch entsprechende Masken beim Aufbringen der Beschichtung erfolgen. Vorzugsweise wird die Beschichtung jedoch auf die gesamte Grundstruktur aufgebracht und anschließend durch ein geeignetes chemisches oder mechanisches Verfahren entfernt. Wird außerdem als Material der Grundstruktur ein für Röntgenstrahlung bzw. Gammastrahlung im Wesentlichen transparentes Material verwendet, so wird die Primärstrahlentransmission des Streustrahlenrasters bzw. Kollimators durch diese Maßnahme erheblich erhöht, da auch in den Material-Bereichen zwischen den beschichteten Innenflächen der Zwischenwände entsprechende Primärstrahlung ungeschwächt oder nur leicht geschwächt hindurchtreten und zum Bildaufbau beitragen kann. Bei Einsatz der Technik der Stereolithographie zum Aufbau der Grundstruktur lässt sich durch Wahl eines geeigneten Polymers ohne Probleme eine derartige Ausgestaltung realisieren. Das Aufbringen der absorbierenden Schicht kann dabei durch unterschiedliche bekannte Verfahren erfolgen, bspw. durch Aufdampfen, durch Sputtern oder durch einen galvanischen Prozess. Eine Möglichkeit der Aufbringung der Schicht besteht auch darin, zunächst eine dünne metallische Schicht durch Sputtern aufzubringen, die dann als Startschicht für eine anschließende galvanische Schichtabscheidung dient.

In einer weiteren vorteilhaften Ausgestaltung des vorliegenden Verfahrens wird der Streustrahlenraster bzw. Kollimator derart auf die Detektorfläche aufgebracht und mit dieser verbunden, dass jeweils ein Eckbereich der Beschichtung innerhalb eines Durchgangskanals über einem Schaltelement eines Detektorelements zu liegen kommt. Derartige Schaltelemente, wie Diode oder TFT, weisen keinerlei Lichtempfindlichkeit auf und tragen somit nicht zur Strahlungsdetektion bei. Durch die Positionierung der Eckbereiche der Beschichtung über diesen Schaltungselementen ist daher die Schwächung der Primärstrahlung in diesem Bereich ohne großen Einfluss.

Für das justierte Aufbringen des Streustrahlenrasters bzw. Kollimators auf die Detektorfläche sind unterschiedliche Techniken einsetzbar. Eine Technik besteht darin, die genaue Solllage der Grundstruktur bezüglich der darunter liegenden Pixel des Detektors als Fiducial Markers oder Referenz-Linien auf der Oberfläche des Detektors bzw. auf einer Schutzschicht, die auf dem Szintillator aufgebracht ist, zu markieren. Evtl. kann die Solllage auch optisch aufprojiziert werden. Die Markierung der Solllage kann mittels Infrarot-Mikroskopie kontrolliert werden. Anschließend wird der Streustrahlenraster bzw. Kollimator mit der Detektorfläche verbunden, bspw. durch Verklebung. Die Verklebung erfolgt hierbei Zug um Zug, so dass zunächst eine kleine Teilfläche verklebt wird, nachdem in diesem Bereich die Lage der Grundstruktur zu den Pixeln genau eingestellt wurde. Danach wird mit visueller Unterstützung, bspw. unter mikroskopischer Kontrolle und/oder Verwendung eines Projektors, der die Solllage der Grundstruktur auf die Montagefläche projiziert, die Lage in den angrenzenden Teilflächen korrigiert und Teilfläche für Teilfläche weiter verklebt. Für dieses Vorgehen kann der Streustrahlenrasters bzw. Kollimator auch vor der Aufbringung in kleinere Teilabschnitte zerlegt werden, bspw. durch Zerschneiden mit einem Laserstrahl. Dies erleichtert die Verklebung, weil dann jeweils nur kleine Flächen bei jedem Klebeschritt justiert und aufgebracht werden müssen. Die durch das Zerschneiden des Streustrahlenrasters bzw. Kollimators entstandenen Schnitt-Zwischenräume müssen allerdings so klein ausgeführt werden, dass sie zu keinen störenden Artefakten im Bild führen.

Eine weitere Möglichkeit zur Aufbringung des Streustrahlenrasters bzw. Kollimators auf die Detektorfläche besteht darin, die aus der Halbleitertechnik bekannte Flip-Chip-Technik einzusetzen. Anstelle des Chips wird hierbei der Streustrahlenraster bzw. Kollimator auf die Detektorfläche anstelle des Substrates aufgebracht. Da das aufzuklebende Raster bzw. Teilstück mechanisch instabil ist, wird vorzugsweise eine stabile mechanische Halterung für den Streustrahlenraster bzw. Kollimator oder die Teilstücke hiervon eingesetzt. Diese Halterung kann bspw. aus einer Teilhöhe des Negativs der Grundstruktur bestehen. Das Negativ kann bspw. durch Sägeschlitze in einer Metallplatte erzeugt werden. Auch die Ausführung dieser Halteplatte mit mehreren in die Durchgangsöffnungen der Grundstruktur einführbaren Justagestiften anstatt von Sägeschlitzen ist möglich.

Eine weitere Möglichkeit, den Streustrahlenraster bzw. Kollimator genau in Relation zu den Pixeln des Detektors zu positionieren besteht darin, diese Justage unter Röntgenstrahlung oder Gammastrahlung vorzunehmen. Dabei wird ausgenutzt, dass die Position des Streustrahlenrasters bzw. Kollimators in Relation zur Pixelanordnung dann optimal ist, wenn das Ausgangssignal des Detektors in dieser Lage ein Maximum einnimmt. Dazu wird zunächst die Lage des Streustrahlenrasters bzw. Kollimators in einem kleineren Teilabschnitt des Detektors justiert und verklebt. Danach werden sukzessive die weiteren Teilabschnitte justiert und verklebt.

Bei der vorliegenden Erfindung können unterschiedliche Klebstoffe eingesetzt werden. So kann bspw. eine Klebeflüssigkeit im zu fixierenden Bereich auf die Detektorfläche oder auch den Streustrahlenraster oder Kollimator aufgesprüht werden, bevor diese miteinander verbunden werden. Eine weitere Möglichkeit besteht in der Verwendung eines weichen, thermisch aufschmelzbaren Klebers, der vor der Montage auf die Detektorfläche und/oder den Streustrahlenraster oder Kollimator aufgebracht wird. Durch Einsatz einer örtlichen Wärmequelle wie bspw. Heißluft wird der Kleber bei richtig positioniertem Streustrahlenraster bzw. Kollimator nur kurz aufgeschmolzen, um Raster bzw. Kollimator und Detektor miteinander zu verbinden.

Als Röntgen- oder Gammadetektoren, auf die mit dem vorliegenden Verfahren ein Streustrahlenraster bzw. Kollimator aufgebracht werden kann, sind selbstverständlich beliebige Detektorarten möglich. So lassen sich bspw. Detektoren mit einem photoleitenden Material oder auch Detektoren mit einer aufgebrachten Szintillatorschicht einsetzen.

Das vorliegende Verfahren wird nachfolgend anhand von Ausführungsbeispielen in Verbindung mit den Zeichnungen ohne Beschränkung des allgemeinen Erfindungsgedankens nochmals kurz erläutert. Hierbei zeigen:
- Fig. 1: die Verhältnisse bei einer Röntgenbildaufnahme eines Objektes unter Einsatz eines Streustrahlenrasters;
- Fig. 2: die Verhältnisse bei einer nuklearmedizinischen Aufnahme des Objektes unter Einsatz eines Kollimators;
- Fig. 3: eine Darstellung der Technik der Stereolithographie beim Aufbau einer Struktur;
- Fig. 4: ein Beispiel für die Durchführung des vorliegenden Verfahrens;
- Fig. 5: ein Beispiel für die mit dem Verfahren realisierte Anordnung aus Streustrahlenraster bzw. Kollimator und Detektor;
- Fig. 6: ein zweites Beispiel für die mit dem Verfahren realisierte Anordnung aus Streustrahlenraster bzw. Kollimator und Detektor; und
- Fig. 7: eine Anlage zum Aufbringen des Streustrahlenrasters bzw. Kollimators.

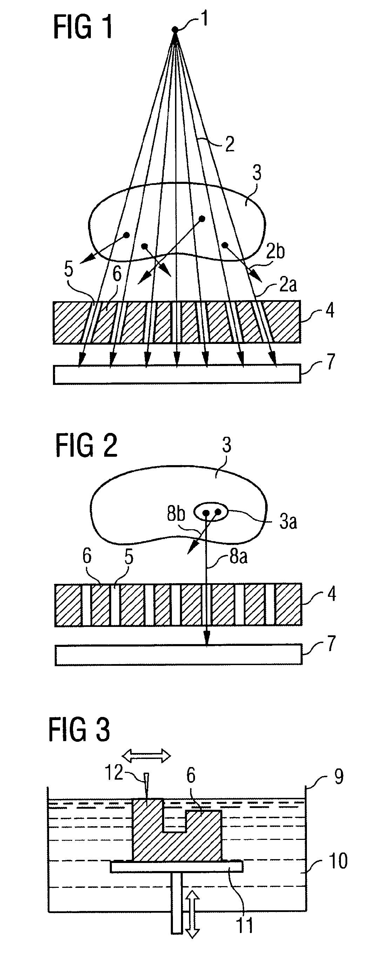

Die typischen Verhältnisse bei einer Röntgenbildaufnahme eines Objektes 3 in der Röntgendiagnostik sind anhand der Figur 1 schematisch dargestellt. Das Objekt 3 befindet sich zwischen dem Röhrenfokus 1 einer Röntgenröhre, der als annähernd punktförmige Röntgenquelle angesehen werden kann, und einer Detektorfläche 7. Die vom Fokus 1 der Röntgenquelle ausgehenden Röntgenstrahlen 2 breiten sich geradlinig in Richtung des Röntgendetektors 7 aus und durchdringen dabei das Objekt 3. Die auf der Detektorfläche 7 auftreffenden Primärstrahlen 2a, die das Objekt 3 vom Röntgenfokus 1 ausgehend geradlinig durchdringen, ergeben auf der Detektorfläche 7 eine ortsaufgelöste Schwächungswertverteilung für das Objektes 3. Ein Teil der vom Röntgenfokus 1 ausgehenden Röntgenstrahlen 2 wird im Objekt 3 gestreut. Die hierbei entstehenden Streustrahlen 2b tragen nicht zur gewünschten Bildinformation bei und verschlechtern beim Auftreffen auf den Detektor 7 das Signal-Rauschverhältnis erheblich. Zur Verbesserung der Bildqualität wird daher ein Streustrahlenraster 4 vor dem Detektor 7 angeordnet. Dieser Streustrahlenraster 4 weist Durchgangskanäle 5 und eine Grundstruktur 6 auf, die im dargestellten Fall des Standes der Technik aus einem absorbierenden Material besteht. Die Durchgangskanäle 5 sind in Richtung des Röhrenfokus 1 ausgerichtet, so dass sie die eintreffende Primärstrahlung 2a auf geradlinigem Wege auf die Detektorfläche treffen lassen. Nicht in dieser Richtung einfallende Strahlen, insbesondere die Streustrahlen 2b, werden durch die absorbierenden Zwischenwände der Grundstruktur 6 blockiert oder erheblich geschwächt. Allerdings lassen sich die absorbierende Zwischenwände aufgrund der bisher bekannten Herstellungstechniken nur mit einer bestimmten Mindestdicke realisieren, so dass dadurch noch ein erheblicher Teil der Primärstrahlung 2a absorbiert wird und nicht zum Bildergebnis beiträgt.

Figur 2 zeigt die Verhältnisse bei der Bildaufnahme in der Nukleardiagnostik. In der Figur ist der zu untersuchende Körper 3 zu erkennen in dem ein Organ 3a angedeutet ist. Durch Injektion eines Gammastrahlung emittierenden Mittels, das sich in dem Organ 3a anreichert, werden aus diesem Bereich Gammaquanten 8a emittiert und treffen auf den Detektor 7, eine Anger-Kamera, auf. Durch den vor dem Detektor 7 angeordneten Kollimator 4, der geradlinig ausgerichtete Durchgangskanäle 5 zwischen Gammastrahlung absorbierenden Zwischenwänden der Grundstruktur 6 aufweist, wird die Projektionsrichtung der jeweiligen Bildaufnahme festgelegt. In andere Richtungen emittierte oder gestreute Gammaquanten 8b, die nicht auf geradlinigem Wege aus dieser Projektionsrichtung kommen, werden vom Kollimator 4 absorbiert. Auch bei dieser Technik wird jedoch aufgrund der nicht beliebig dünnen absorbierenden Zwischenwände der Grundstruktur 6 noch ein beträchtlicher Teil der Primärstrahlung 8a absorbiert.

Die vorliegende Erfindung lässt sich mit einem Verfahren realisieren, das eine sehr präzise Fertigung von Streustrahlenrastern oder Kollimatoren mit sehr dünnen Zwischen- bzw. Trennwänden zwischen den Durchgangskanälen 5 ermöglicht. Hierbei wird zur Herstellung des Streustrahlenrasters oder Kollimators eine Rapid Prototyping Technik eingesetzt. Ein Beispiel für eine derartige Technik ist die Stereolithographie, wie sie anhand der Darstellung in der Figur 3 veranschaulicht wird. Bei dieser Technik wird ein UV-Laserstrahl 12 auf die Oberfläche eines flüssigen UV-vernetzbaren Polymers 10 gerichtet, der sich in einem Behältnis 9 befindet. Der UV-Laserstrahl 12 bewegt sich anhand eines dreidimensionalen Volumenmodells der zu erstellenden Grundstruktur 6 über die Oberfläche des flüssigen Polymers 10, um die Grundstruktur 6 schichtweise aufzubauen. Nach der Verfestigung einer Schicht wird diese über eine Bauplattform 11 um eine weitere Schichtdicke abgesenkt, so dass der UV-Laser 12 die nächste Schicht entsprechend dem dreidimensionalen Volumenmodell verfestigen kann. Auf diese Weise wird Schicht für Schicht die Grundstruktur 6 aus dem vernetzten UV-gehärteten Polymer 10 aufgebaut. Aufgrund der guten Fokussierbarkeit des UV-Laserstrahls 12 lassen sich hierbei sehr filigrane Strukturen mit sehr hoher Genauigkeit realisieren. Die Grundstruktur 6 kann direkt auf der Bauplattform 11 oder auf einer zusätzlichen in der Figur nicht dargestellten Trägerplatte aufgebaut werden. Weiterhin lässt sich eine Grundplatte auch direkt mit der Technik der Stereolithographie aufbauen, auf der dann die Grundstruktur 6 entsprechend der gewünschten Geometrie gebildet wird.

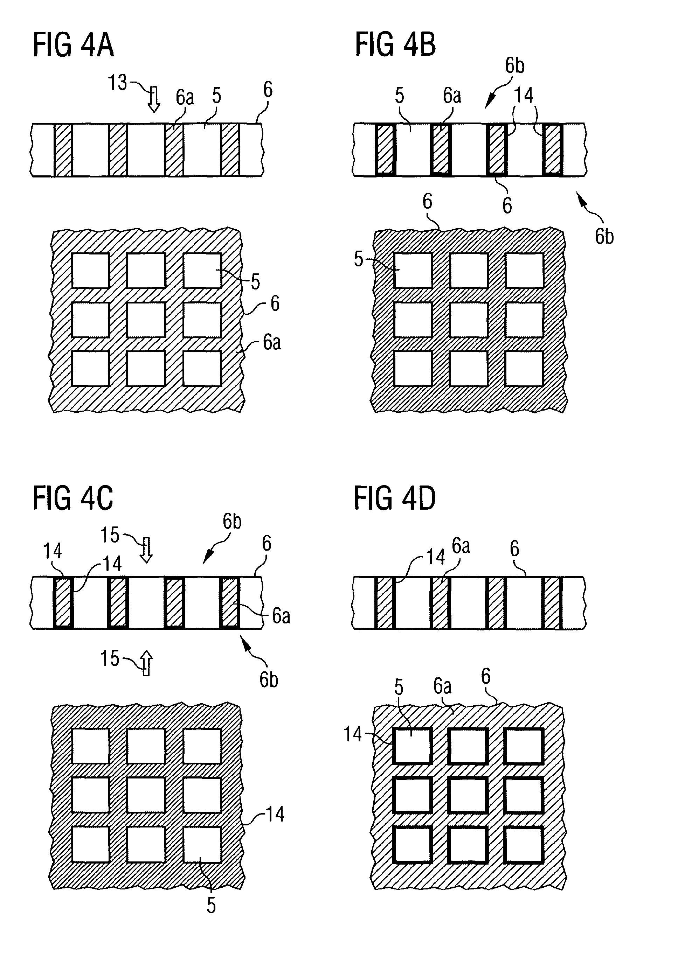

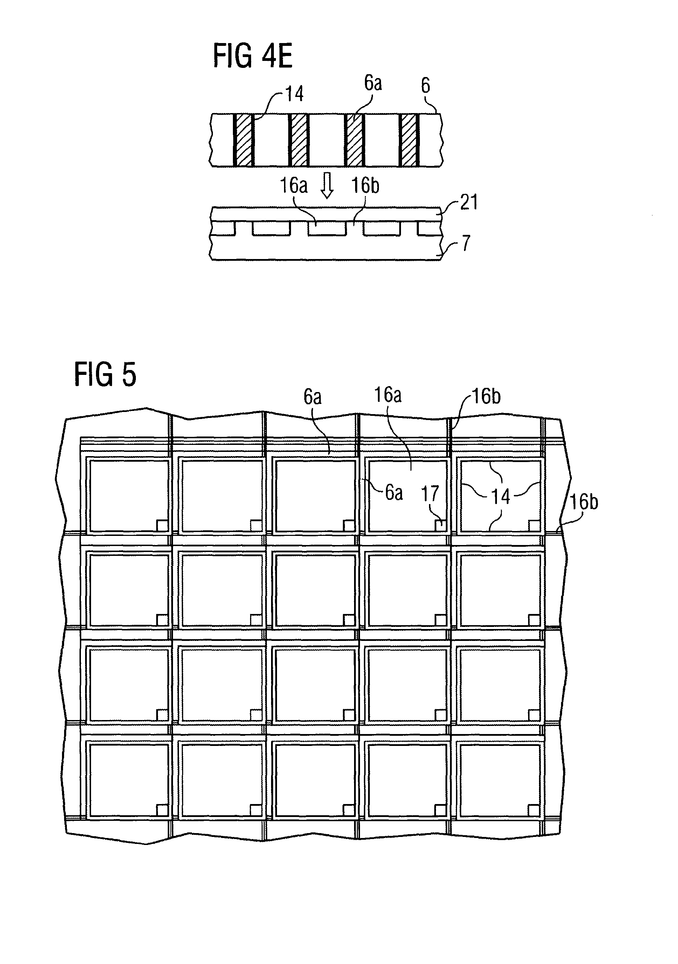

Figur 4 zeigt ein Beispiel für die Durchführung des vorliegenden Verfahrens. Bei dieser Ausführungsform wird eine Grundstruktur 6 entsprechend für den zu erstellenden Streustrahlenraster oder Kollimator aus einem für Röntgenstrahlung im Wesentlichen durchlässigen Aufbaumaterial, bspw. einem UV-gehärteten Polymer, erzeugt. Die Grundstruktur 6 wird anschließend mit einem absorbierenden Material hoher Ordnungszahl beschichtet (Beschichtungsschritt 13; Figur 4a). In den einzelnen Teilfiguren 4a - 4d ist jeweils im oberen Teil ein Ausschnitt aus der Grundstruktur 6 mit den Durchgangskanälen 5 und den Zwischenwänden 6a bzw. aus dem Streustrahlenraster oder Kollimator im Querschnitt und im unteren Teil in Draufsicht zu erkennen. Aus diesem Beschichtungsschritt 13 resultiert eine Grundstruktur 6 mit einer stark absorbierenden Beschichtung 14, die sowohl auf den Innenflächen der Zwischenwände 6a in den Durchgangskanälen 5 als auch an der Ober- und Unterseite 6b der Grundstruktur 6, d. h. an den Stirnflächen der Zwischenwände 6a, aufgebracht ist (Figur 4b).

Die Beschichtung 14 wird schließlich an den Stirnseiten der Zwischenwände 6a durch einen chemischen oder mechanischen Verfahrensschritt, bspw. einen chemischen Ätzschritt 15, entfernt (Figur 4c). Auf diese Weise wird ein Streustrahlenraster oder Kollimator mit Durchgangskanälen 5 erhalten, die zwischen den absorbierenden Beschichtungen 14 der Zwischenwände 6b der Grundstruktur 6 liegen (Figur 4d). Die Zwischenwände 6b bilden mit den sie begrenzenden Beschichtungen 14 ebenfalls Durchgangskanäle für die Primärstrahlung, die ein sehr hohes Schachtverhältnis aufweisen.

Für die Aufbringung der Beschichtung 14 kann bspw. zunächst eine dünne Kupfer-Schicht durch Sputtern auf die Oberfläche der Grundstruktur 6 aufgebracht werden. Die Dicke dieser Kupfer-Schicht liegt im 10tel µm-Bereich. Auf diese Schicht wird schließlich durch galvanische Abscheidung eine Blei-Zinn-Legierung aufgebracht. Die Dicke dieser Legierung wird so ausgeführt, dass die nötige Absorption der Sekundärstrahlung erreicht wird.

Nach Fertigstellung des Streustrahlenrasters bzw. Kollimators wird dieser derart auf den Detektor 7 aufgeklebt, dass die Zwischenwände 6a über weniger empfindlichen Zwischenbereichen 16b des Detektors liegen (Figur 4e). In der Figur 4e ist hierbei ein Ausschnitt aus dem Detektor 7 mit den mit matrixförmig angeordneten Detektorelementen 16 dargestellt. Die Detektorelemente 16 bilden eine Detektorfläche mit für Röntgen- bzw. Gammastrahlen empfindlichen Bereichen 16a und unempfindlichen Zwischenbereichen 16b.

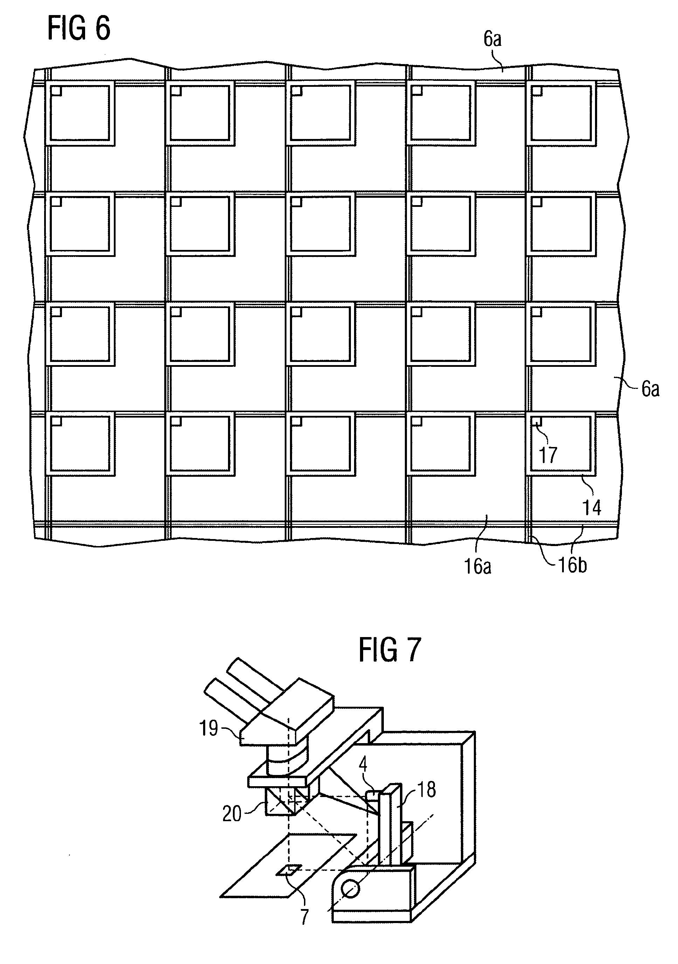

Figur 5 zeigt ein Ergebnis des in Figur 4 dargestellten Verfahrens. In der Figur ist in Draufsicht ein Ausschnitt aus einem Röntgendetektor 7 mit den matrixförmig angeordneten Detektorelementen 16 und dem darauf aufgeklebten Streustrahlenraster zu erkennen. Die Detektorelemente 16 setzen sich aus den strahlungsempfindlichen Detektorbereichen 16a und strahlungsunempfindlichen Zwischenbereichen 16b zusammen. Die Detektorelemente 16 werden auch als Pixel bezeichnet. Ein derartiger Röntgendetektor 7 kann bspw. 3000 x 3000 Pixel mit einer Abmessung von 143 x 143 µm aufweisen. Im linken Eckbereich jeder Detektorfläche ist hierbei ein Schaltelement 17, bspw. ein TFT, zu erkennen, der nicht zur Strahlungsdetektion beiträgt. Figur 5 zeigt ein Ausführungsbeispiel, bei dem eine Wandstärke der Zwischenwände 6a der Grundstruktur 6 des Streustrahlenrasters von etwa 20 µm realisiert wurde. Wie aus der Figur zu erkennen ist, ist der Streustrahlenraster mit den Zwischenwänden 6a über den strahlungsunempfindlichen Bereichen 16b des Detektors 7 positioniert. Die absorbierende Beschichtung 14 ist dabei nur innerhalb der Durchgangskanäle 5 vorhanden, so dass nur an dieser Stelle eine Schwächung der Primärstrahlung eintritt. Die breiteren Wandbereiche 6a zwischen dieser Beschichtung 14 weisen eine relativ hohe Transmission für die Primärstrahlung auf, so dass diese ebenfalls als Durchlassbereiche angesehen werden können. Diese Zwischenwände 6a sind im vorliegenden Beispiel aus einem Polymer gebildet, das die Röntgenstrahlung nur unwesentlich schwächt. Am Kreuzungspunkt der strahlungsunempfindlichen Bereiche 16b des Detektors 7 sind die entsprechenden Schaltelemente 17 angeordnet, über denen im vorliegenden Beispiel Eckbereiche der absorbierenden Beschichtung 14 liegen.

Die Herstellung einer derartigen Anordnung aus Streustrahlenraster oder Kollimator und Detektor ist einfach und kostengünstig zu realisieren. Insbesondere ist es dabei von Vorteil, dass ein Fehler beim Herstellen des Rasters nicht automatisch zur Zerstörung des gesamten Detektors führt. Durch Freihalten der Stirnseiten der Zwischenwände 6a von der absorbierenden Beschichtung 14 ist eine bessere Primärstrahlentransparenz als mit herkömmlichen Rastern erreichbar. Durch die feste Verbindung des Rasters und des Detektors zusammen mit der teilweisen Übereinstimmung der Strukturen der Zwischenwände 6a und Pixelgrenzen wird eine verbesserte Empfindlichkeit des Detektors erreicht, so dass Dosis eingespart werden kann. Durch diese Ausgestaltung werden in gleicher Weise Moire-Störungen vermieden. Die in der Figur weiß dargestellte Durchgangskanäle 5 sind in der Regel mit Luft oder Gas gefüllt.

Figur 6 zeigt ein weiteres Beispiel, bei dem die Zwischenwände 6a des Streustrahlenrasters eine Dicke von etwa 70 µm aufweisen und somit sehr leicht durch Stereolithographie herstellbar sind. Auch in diesem Fall wird eine ähnliche Primärstrahlentransparenz wie bei der Ausgestaltung der Figur 5 erreicht, da die Absorberbeschichtung 14 an den Stirnflächen der Zwischenwände 6a entfernt ist und somit auch an diesen Stellen Primärstrahlung auf den Detektor 7 treffen kann.

Figur 7 zeigt eine Anlage zum Aufbringen des fertigen Streustrahlenrasters bzw. Kollimators auf den Detektor mittels Flip-Chip-Technik. Die exakte Lage des mit dem Manipulatorarm 18 aufgenommenen Streustrahlenrasters bzw. Kollimators oder auch eines Teilabschnittes davon wird über ein Mikroskop 19 kontrolliert, durch das zwei mittels einem Strahlteiler 20 überlagerte Bilder der Detektoroberfläche sowie des Streustrahlenrasters bzw. Kollimators betrachtet und durch Verschiebung zur Deckung gebracht werden können. Falls erforderlich kann dazu auch eine limitierte Rotation des Detektors durchgeführt werden. Wenn die gegenseitige Lage justiert ist, wird der Streustrahlenraster mittels des Manipulators ortsgenau auf die vorbereitete Verklebung aufgebracht. Für die Halterung des Rasters wird vorzugsweise eine entsprechend ausgebildete Trägerplatte mit entsprechenden Vertiefungen oder Haltestiften eingesetzt.

## Patentansprüche

1. Verfahren zur Herstellung und Aufbringung eines Streustrahlenrasters oder Kollimators auf einen Röntgen- oder Gammadetektor mit matrixförmig angeordneten Detektorelementen (16), die eine Detektorfläche mit für Röntgen- bzw. Gammastrahlung empfindlichen Detektionsbereichen (16a) und weniger empfindlichen Zwischenbereichen (16b) bilden,
bei dem zunächst eine Grundstruktur (6) für den Streustrahlenraster bzw. Kollimator mittels einer Rapid Prototyping Technik erzeugt wird, durch die Durchgangskanäle (5) und Zwischenwände (6a) des Streustrahlenrasters bzw. Kollimators gebildet werden, die zumindest in einer ersten Richtung einen Mittenabstand aufweisen, der gleich oder ein ganzzahliges Vielfaches eines Mittenabstandes der empfindlichen Detektionsbereiche (16a) des Detektors ist, anschließend die Zwischenwände (6a) zur Fertigstellung des Streustrahlenrasters bzw. Kollimators mit einem Röntgen- bzw. Gammastrahlung stark absorbierenden Material (14) beschichtet werden, und der Streustrahlenraster bzw. Kollimator schließlich derart auf die Detektorfläche aufgebracht und mit der Detektorfläche verbunden wird, dass zumindest senkrecht zur ersten Richtung verlaufende Zwischenwände (6a) oder deren Beschichtung (14) über den weniger empfindlichen Zwischenbereichen (16b) der Detektorfläche liegen.

2. Verfahren nach Anspruch 1,
**dadurch gekennzeichnet, dass** das Verfahren der Stereolithographie als Rapid Prototyping Technik eingesetzt wird.

3. Verfahren nach Anspruch 1 oder 2,
**dadurch gekennzeichnet, dass** die Geometrie der Grundstruktur (6) entsprechend der matrixförmigen Anordnung der Detektorelemente (16) gewählt wird, so dass ein zellenartiger Streustrahlenraster bzw. Kollimator entsteht, bei dem die Anordnung von für Röntgen- bzw. Gammastrahlung durchlässigen Durchgangskanälen (5) mit der Anordnung der empfindlichen Detektionsbereiche (16a) übereinstimmt.

4. Verfahren nach einem der Ansprüche 1 bis 3,
**dadurch gekennzeichnet, dass** die Grundstruktur (6) aus einem für Röntgen- bzw. Gammastrahlung im Wesentlichen transparenten Material erzeugt wird und Stirnflächen der Zwischenwände (6a) von der Beschichtung mit dem absorbierenden Material (14) freigehalten werden.

5. Verfahren nach einem der Ansprüche 1 bis 3,
**dadurch gekennzeichnet, dass** die Grundstruktur (6) aus einem für Röntgen- bzw. Gammastrahlung im Wesentlichen transparenten Material erzeugt wird und die Beschichtung mit dem absorbierenden Material (14) von Stirnflächen der Zwischenwände (6a) entfernt wird.

6. Verfahren nach einem der Ansprüche 1 bis 5,
**dadurch gekennzeichnet, dass** das Beschichten durch Sputtern und/oder galvanische Abscheidung erfolgt.

7. Verfahren nach einem der Ansprüche 1 bis 6,
**dadurch gekennzeichnet, dass** der Streustrahlenraster bzw. Kollimator derart auf die Detektorfläche aufgebracht und mit der Detektorfläche verbunden wird, dass jeweils ein Eckbereich der Beschichtung mit dem absorbierenden Material (14) eines Durchgangskanals (5) über einem Schaltelement (17) eines Detektorelements (16) liegt.

8. Verfahren nach einem der Ansprüche 1 bis 7,
**dadurch gekennzeichnet, dass** der Streustrahlenraster bzw. Kollimator mit der Detektorfläche verklebt wird.

9. Verfahren nach Anspruch 8,
**dadurch gekennzeichnet, dass** die Verklebung für aneinandergrenzende Teilflächen der Detektorfläche nacheinander durchgeführt wird.

10. Verfahren nach Anspruch 9,
**dadurch gekennzeichnet, dass** der Streustrahlenraster bzw. Kollimator vor dem Aufbringen in den Teilflächen entsprechende Teilabschnitte zerteilt wird, die einzeln nacheinander aufgebracht werden.

11. Verfahren nach einem der Ansprüche 1 bis 8,
**dadurch gekennzeichnet, dass** der Streustrahlenraster bzw. Kollimator mit einer Flip-Chip-Technik auf die Detektorfläche aufgebracht wird.

12. Verfahren nach Anspruch 11,
**dadurch gekennzeichnet, dass** der Streustrahlenraster bzw. Kollimator mit Hilfe einer die Grundstruktur (6) stützenden Halterung auf die Detektorfläche aufgebracht wird.

13. Verfahren nach einem der Ansprüche 1 bis 12,
**dadurch gekennzeichnet, dass** zur Verklebung eine Klebeflüssigkeit auf die Detektorfläche und/oder den Streustrahlenraster bzw. Kollimator aufgesprüht wird.

14. Verfahren nach einem der Ansprüche 1 bis 12,
**dadurch gekennzeichnet, dass** zur Verklebung ein thermisch aufschmelzbarer Kleber auf die Detektorfläche und/oder den Streustrahlenraster bzw. Kollimator aufgebracht und nach dem Aufbringen des Streustrahlenrasters bzw. Kollimators auf die Detektorfläche mittels einer Wärmequelle kurz aufgeschmolzen wird.

15. Verfahren nach einem der Ansprüche 1 bis 14,
**dadurch gekennzeichnet, dass** die Grundstruktur (6) derart aufgebaut wird, dass ein fokussierter Streustrahlenraster bzw. Kollimator entsteht.

16. Röntgendetektor mit matrixförmig angeordneten Detektorelementen und einem Streustrahlenraster mit Durchgangskanälen (5) und Zwischenwänden (6a) mit einer absorbierenden Beschichtung (14), der nach einem der Patentansprüche 1 bis 15 hergestellt und aufgebracht ist.

17. Gammadetektor mit matrixförmig angeordneten Detektorelementen und einem Kollimator mit Durchgangskanälen (5) und Zwischenwänden (6a) mit einer absorbierenden Beschichtung (14), der nach einem der Patentansprüche 1 bis 15 hergestellt und aufgebracht ist.
